# EUROPEAN PATENT SPECIFICATION

(11) **EP 3 279 515 B1**
(45) Date of publication and mention of the grant of the patent: **04.05.2022**
(21) Application number: 16772083.8
(22) Date of filing: 04.03.2016
(51) Int. Cl.: F16H 57/021, B60K 6/26, B60K 6/36, B60K 6/40, B60K 6/405, B60K 6/46, F16H 57/027, H02K 11/40, H02K 7/116, H02K 5/14

(54) **POWER TRANSMISSION DEVICE AND POWER OUTPUT APPARATUS PROVIDED WITH SAME**
LEISTUNGSÜBERTRAGUNGSVORRICHTUNG UND LEISTUNGSAUSGANGSVORRICHTUNG DAMIT
DISPOSITIF DE TRANSMISSION DE PUISSANCE ET APPAREIL DE SORTIE DE PUISSANCE LE COMPORTANT

(30) Priority: 31.03.2015 JP 2015070741
(43) Date of publication of application: 07.02.2018
(73) Proprietor: Aichi Machine Industry Co., Ltd., Nagoya-shi, Aichi 456-8601 (JP)
(72) Inventor: NAKADERA Hiroyuki, Nagoya-shi Aichi 456-8601 (JP); NAKASHIMA Takayuki, Nagoya-shi Aichi 456-8601 (JP); SATO Motohiko, Nagoya-shi Aichi 456-8601 (JP)
(74) Representative: Global IP Europe Patentanwaltskanzlei
(86) International application number: PCT/JP2016/056708
(87) International publication number: WO 2016/158199

(56) References cited:
- WO-A1-2011/148642
- JP-A- 2006 320 129
- JP-A- 2009 284 700
- JP-A- 2010 151 261
- JP-A- 2012 110 149
- US-A1- 2003 098 204
- US-A1- 2008 258 576

## Description

### Technical Field

The present invention relates to a power transmission device configured to transmit power from an electric motor, which is input via a rotational shaft of the electric motor, to a drive shaft; and a power output apparatus provided with this power transmission device.

### Background Art

JP 2000 244 180 A (Patent Document 1) describes a power transmission device including a rotational shaft integrally rotatable with a rotor of a motor; a countershaft disposed in parallel with the rotational shaft; an output shaft disposed in parallel with the rotational shaft and the countershaft; a gear mechanism configured to connect the rotational shaft to the countershaft and also connect the countershaft to the output shaft; and a housing for housing these constituents; wherein power of the motor is transmitted to the output shaft with a predetermined speed reduction ratio.

In this power transmission device, an end portion of the rotational shaft, on the side that is opposite to the side where the gear mechanism is disposed across the motor, protrudes out of the housing; and a brush member is brought into sliding contact with a shaft end portion of the rotational shaft. Such a configuration is intended to reduce the electromagnetic noise caused by the switching operations of inverter. Additionally, in this power transmission device, the brush member and the shaft end portion of the rotational shaft are covered with a cover member. Such a configuration is intended to prevent the biting of any foreign matter into the sliding contact portion of the brush member and the rotational shaft. Moreover, the interior of the cover member communicates with the outside air via a breather pipe. Such a configuration is intended to prevent pressure increases in the brush chamber.

WO 2011/148642 A1 discloses a power transmission device configured to transmit power from an electric motor, which is input via a rotational shaft of the electric motor, to a drive shaft; the power transmission device comprising: a first shaft disposed in parallel with the drive shaft and connected to the rotational shaft of the electric motor and to the drive shaft; and a case member having a shaft support that supports the first shaft, wherein: the first shaft is provided with a brush member that is in sliding contact with a first axial end portion of the first shaft; and the shaft support includes a first end shaft support portion that supports the first axial end portion of the first shaft, and a second end shaft support portion that supports a second axial end portion of the first shaft.

### Citation List

### Patent Literature

Patent Document 1: JP 2000 244 180 A

### Summary of Invention

### Technical Problem

However, with the power transmission device described above, while it is possible to reduce electromagnetic noise, the rotational shaft protrudes out of the housing and also the end portion of the rotational shaft is covered with the cover member. This configuration results in an increase in the overall length of the device. Additionally, a cover member separate from the housing is required and, also, a dedicated breathing pipe for preventing pressure increases in the brush chamber is needed. This configuration results in an increase in the number of components.

In light of the problems described above, an object of the present invention is to provide a technique whereby it is possible to both shorten the overall length of the device and reduce the number of components of the device.

### Solution to Problem

A power transmission device of the present invention employs the following means to achieve the object described above.

In the power transmission device according to the present invention as defined in claim 1, power from an electric motor, which is input via a rotational shaft of the electric motor, is transmitted to a drive shaft. The power transmission device is provided with a first shaft and a case member. The first shaft is disposed in parallel with the drive shaft and is connected to the rotational shaft of the electric motor and to the drive shaft. The case member has a shaft support that supports the first shaft. Moreover, the first shaft is provided with a brush member that is in sliding contact with a first axial end portion of the first shaft. Moreover, the shaft support includes a first end shaft support portion that supports the first axial end portion of the first shaft, and a second end shaft support portion that supports a second axial end portion of the first shaft. Furthermore, the case member is configured such that a power generation member related to the generation of power transmitted to the first shaft is attached to the case member on a side where the first end shaft support portion is disposed, and the case member defines, between the case member and the power generation member, a space that communicates with outside air when the power generation member is attached to the case member. Additionally, at least a portion of the first end shaft support portion is disposed within the space. Furthermore, a brush housing portion that houses the brush member is provided integrally with the first end shaft support portion of which at least a portion is disposed within the space. Moreover, the brush housing portion forms a housing hole which extends from outside the case member to the first axial end portion and into which the first axial end portion protrudes via a through bore formed in the center portion of the first end shaft support portion when the first shaft is supported on the first end shaft support portion, and a communication hole whereby the housing hole communicates with the space.

The phrase "connect to the rotational shaft of the electric motor" in the present invention advantageously encompasses aspects in which the first shaft is directly connected to the rotational shaft of the electric motor, and also aspects in which the first shaft is indirectly connected to the rotational shaft of the electric motor. In an example of an aspect in which the first shaft is indirectly connected to the rotational shaft of the electric motor, the first shaft is connected to another shaft via a gear mechanism, and the first shaft is connected to the rotational shaft of the electric motor via this other shaft. Additionally, the phrase "connect to the drive shaft" in the present invention typically applies to aspects in which the first shaft is connected to the drive shaft via a gear mechanism. The term "power generation member" applies to an internal combustion engine when the power generation member is mounted in a hybrid automobile.

According to the present invention, the first end shaft support portion is disposed within the space which is formed when the power generation member is attached to the power transmission device, a brush housing portion is provided integrally with the first end shaft support portion of which at least a portion is disposed within the space, and the interior of the brush housing portion communicates with the outside air via the space. As a result of this configuration, the overall length of the device need not be increased for the sole reason of bringing the brush member into sliding contact with the first axial end portion of the first shaft. Additionally, there is no need to provide a dedicated cover member for covering the brush member, or a dedicated breathing pipe for suppressing pressure increases within the brush chamber. As such, the number of components can be reduced.

According to a reference example of a power transmission device which does not form the present invention, the power generation member is the electric motor; and the space is formed between the case member and the electric motor when the electric motor is attached to the case member.

According to this reference example, the space formed when the electric motor is attached to the case member can be used and, as such, there is no need to make special improvements in the case member for the purpose of only providing a space.

According to the invention, the power generation member is an internal combustion engine, and the power transmission device is configured to transmit power from the internal combustion engine to a rotational shaft of a generator and to drive the electric motor using power generated by the generator. Moreover, the space is formed between the case member and the internal combustion engine when the internal combustion engine is attached to the case member.

According to the invention, in cases where the power transmission device is mounted in a hybrid automobile or the like, the space formed when the internal combustion engine is attached to the case member can be used and, as such, there is no need to make special improvements in the case member for the purpose of only providing a space.

According to a preferred embodiment of the power transmission device, the space is a housing space for housing a rotation fluctuation smoothing member which is attached to a crank shaft in order to smooth rotation fluctuation of the crank shaft of the internal combustion engine.

Herein, the term, "rotation fluctuation smoothing member" in the present invention applies to a flywheel when the power transmission device is configured as a manual transmission, and applies to a drive plate when the power transmission device is configured as an automatic transmission, a speed reducer without a gear shift function, or a speed increaser without a gear shift function.

According to this embodiment, the space for housing the flywheel or the drive plate can be used and, as such, there is no need to make special improvements in the case member for the purpose of only providing a space.

According to the invention, an input shaft is disposed in parallel with the drive shaft and connected directly to the rotational shaft of the electric motor. Moreover, the first shaft is configured as an intermediate shaft disposed between the input shaft and the drive shaft.

According to the invention, the brush member is brought into sliding contact with the intermediate shaft which is disposed downstream from the input shaft in the power transmission path of the power transmission device. As such, noise propagation reduction effects can be further enhanced.

According to another reference example of a power transmission device which does not form the present invention, the first shaft is configured as an input shaft connected directly to the rotational shaft of the electric motor.

According to this reference example, even in the case of a configuration that does not include the intermediate shaft, that is, in the case of a configuration in which the input shaft is connected to the drive shaft via a pair of gears, the brush member can be brought into sliding contact with the input shaft and noise propagation reduction effects can be obtained.

According to another preferred embodiment of the power transmission device, the case member includes a water drain configured to discharge water that has accumulated in the space. Additionally, the space is formed between the case member and the power generation member so as to communicate with outside air using the water drain.

According to this embodiment, there is no need to provide a dedicated opening in the case member for the purpose of communicating the housing hole with the outside air.

According to a preferred embodiment of a power output apparatus as defined in dependent claim 4, the power output apparatus includes an electric motor; an inverter electrically connected to the electric motor; an internal combustion engine; a generator configured to generate power with driving of the internal combustion engine; a storage battery electrically connected to the generator and the inverter; the power transmission device according to any of the aspect or embodiments described above, configured to transmit power from the electric motor to the drive shaft and also to transmit power from the internal combustion engine to the generator. Additionally, the power output apparatus is configured such that the power generated by the generator is stored in the storage battery, and configured such that the power from the storage battery is supplied to the electric motor via the inverter.

According to the present invention, the power transmission device according to the present invention as defined in claim 1 is provided. As a result, the same effects that are exhibited by the power transmission device of the present invention can be obtained. For example, an effect of being able to shorten the overall length of the device, an effect of being able to reduce the number of components of the device, and the like can be obtained.

### Advantageous Effects of Invention

According to the present invention, a technique can be provided whereby it is possible to both shorten the overall length of a device and reduce the number of components of the device.

### Brief Description of Drawings

FIG. 1 is a schematic configuration drawing illustrating a configuration of a power output apparatus 1 according to an embodiment of the present invention.
FIG. 2 is an explanatory drawing of a configuration of a power transmission path on an engine 2 side of a power transmission device 20, as viewed from a direction corresponding to a cross-section taken along line A-Aof FIG. 6.
FIG. 3 is an explanatory drawing of a configuration of a power transmission path on a motor 4 side of the power transmission device 20, as viewed from a direction corresponding to a cross-section taken along line B-B of FIG. 6.
FIG. 4 is a perspective view of a housing 32, as viewed from a first space forming wall 32a side.
FIG. 5 is a perspective view of the housing 32, as viewed from a flywheel housing space FAS side.
FIG. 6 is a front view of a housing 32, as viewed from the first space forming wall 32a side.
FIG. 7 is a front view of the housing 32, as viewed from the flywheel housing space FAS side.
FIG. 8 is a side view of the housing 32, as viewed from a brush housing wall 32d.
FIG. 9 is an enlarged drawing illustrating section A of FIG. 7 in an enlarged manner.
FIG. 10 is an enlarged drawing illustrating section B of FIG. 7 in an enlarged manner.
FIG. 11 is a perspective view of FIG. 10, as viewed from below.
FIG. 12 is a perspective view of a case main body 34, as viewed from a third space forming wall 34a side.
FIG. 13 is a perspective view of the case main body 34, as viewed from a motor attachment wall 34b and a generator attachment wall 34c side.
FIG. 14 is an explanatory drawing illustrating a situation in which a brush member 70 is attached to the brush housing wall 32d.
FIG. 15 is a cross-sectional view illustrating a cross-section taken along line X-X of FIG. 9.
FIG. 16 is a cross-sectional view illustrating a cross-section taken along line Y-Y of FIG. 9.
FIG. 17 is an exterior view illustrating an appearance of the brush member 70.

### Description of Embodiments

Next, a preferred embodiment of the present invention will be described using an example.

### Embodiment

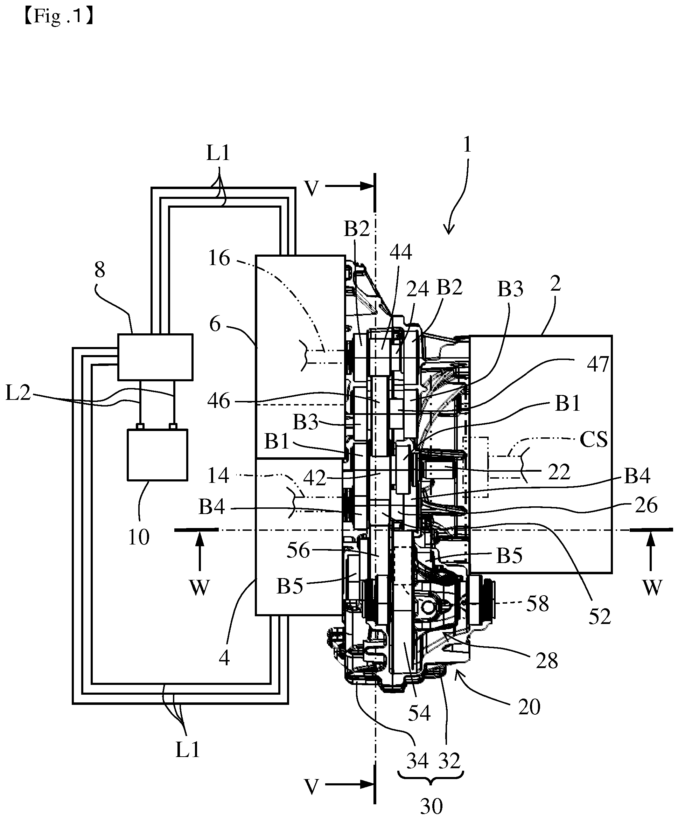

As illustrated in FIG. 1, a power output apparatus 1 according to the present embodiment of the present invention is provided with a power transmission device 20, an engine 2 connected to the power transmission device 20, a motor 4 and a generator 6, an inverter 8 electrically connected to the motor 4 and the generator 6 via a three-phase AC power line L1, and a secondary battery 10 electrically connected to the inverter 8 via a power line L2. In this embodiment, an example of a configuration is given in which the motor 4 corresponds to the "electric motor" of the present invention, and the secondary battery 10 corresponds to the "storage battery" of the present invention. Additionally, in this embodiment, an example of a configuration is given in which the engine 2 corresponds to the "internal combustion engine" and the "power generation member" of the present invention.

The motor 4 is configured as a three-phase AC type synchronous generator motor capable of driving as an electric motor and also capable of generating power as a generator. The motor 4 is driven by power supplied from the secondary battery 10 via the inverter 8, and also by power generated by the generator 6. In this embodiment, an example of a configuration is given in which a motor rotational shaft 14 corresponds to the "rotational shaft of the electric motor" of the present invention.

The generator 6 is configured as a three-phase AC type synchronous generator that generates power as a result of a generator rotational shaft 16 being rotated by the engine 2. The power generated by the generator 6 is sent to the secondary battery 10 via the inverter 8 and stored.

The inverter 8 is configured as a high-frequency controller that changes the direction of current using switching elements (not illustrated in the drawings). When powering, the inverter 8 converts the direct current from the secondary battery 10 into three-phase alternating current and supplies this three-phase alternating current to the motor 4 or, alternately, converts the direct current generated by the generator 6 into three-phase alternating current and supplies this three-phase alternating current to the motor 4. Additionally, when regenerating, the inverter 8 converts the three-phase alternating current from the motor 4 to direct current and supplies this direct current to the secondary battery 10; and when charging, the inverter 8 converts the three-phase alternating current from the generator 6 to direct current and supplies this direct current to the secondary battery 10.

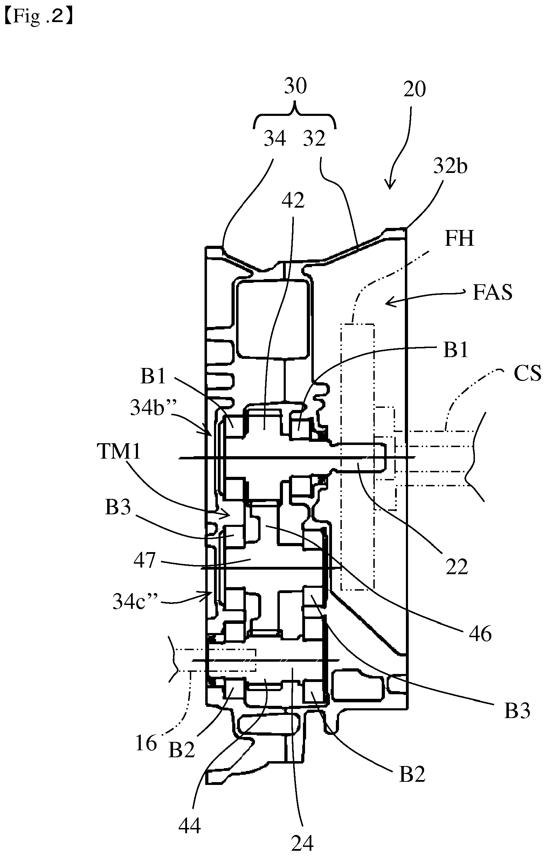

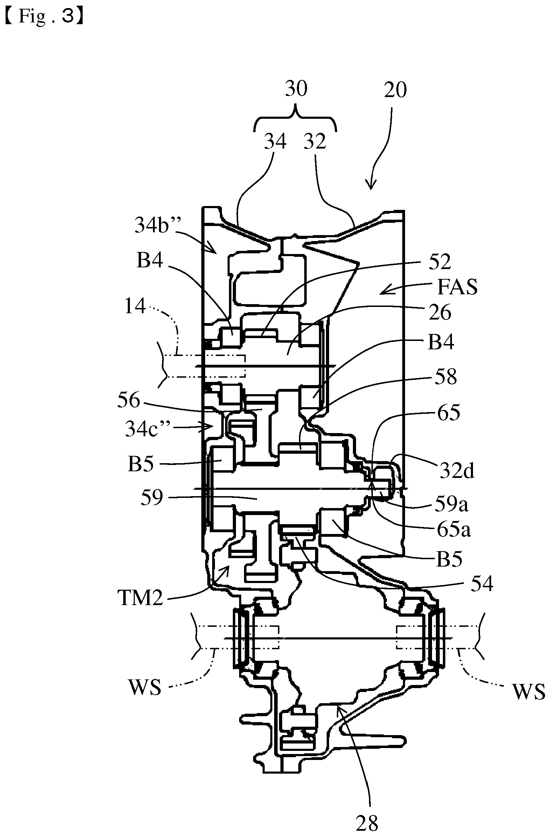

As illustrated in FIG. 2, the power transmission device 20 is provided with a first input shaft 22 connected to a crank shaft CS via a flywheel FH, an output shaft 24 connected to the generator rotational shaft 16, a first gear mechanism TM1 that connects the output shaft 24 with the first input shaft 22. As illustrated in FIG. 3, a second input shaft 26 connected to the motor rotational shaft 14, a differential device 28 to which an axle WS is connected, and a second gear mechanism TM2 that connects the differential device 28 with the second input shaft 26. And, as illustrated in FIGS. 2 and 3, the power transmission device 20 is provided with a gear case 30 that houses these components. In this embodiment, an example of a configuration is given in which the flywheel FH corresponds to the "rotation fluctuation smoothing member" of the present invention, and the axle WS corresponds to the "drive shaft" of the present invention.

As illustrated in FIG. 3, the second input shaft 26 is rotatably supported in the gear case 30 via bearings B4, B4. A shaft center hole is formed at a shaft center of a first end side of the second input shaft 26 (the left side in FIG. 3), and a spline recessed line is formed on an inner circumferential surface of this shaft center hole. The motor rotational shaft 14 mates with the spline recessed line. In this embodiment, an example of a configuration is given in which the second input shaft 26 corresponds to the "input shaft" of the present invention.

As illustrated in FIG. 3, the second gear mechanism TM2 is configured from a second input gear 52 integrally formed with the second input shaft 26, a ring gear 54 fixed to the differential device 28, a second idler gear 56 that mates with the second input gear 52, a third idler gear 58 that mates with the ring gear 54, and a second idler shaft 59 to which the second idler gear 56 is fixed and with which the third idler gear 58 is integrally formed. The second gear mechanism TM2 configured to transmit the rotation of the motor rotational shaft 14 to the axles WS, WS. In this embodiment, an example of a configuration is given in which the second idler shaft 59 corresponds to the "first shaft" and the "intermediate shaft" of the present invention.

As illustrated in FIG. 3, the second idler shaft 59 is rotatably supported in the gear case 30 via bearings B5, B5, and includes a sliding contact portion 59a, which a brush member 70 (described later) slidably contacts, on an axial first end thereof (the right side in FIG. 3). An outer circumferential surface of the sliding contact portion 59a is configured as a slip ring surface.

As illustrated in FIGS. 1 to 3, the gear case 30 is configured from the housing 32 and a case main body 34. By fastening the housing 32 and the case main body 34 together, a main component housing space MAS for housing main components such as the first input shaft 22, the output shaft 24, the first gear mechanism TM1, the second input shaft 26, the differential device 28, and the second gear mechanism TM2 is formed. Lubricating oil is stored in a lower portion of this internal space. In this embodiment, an example of a configuration is given in which the gear case 30 corresponds to the "case member" of the present invention.

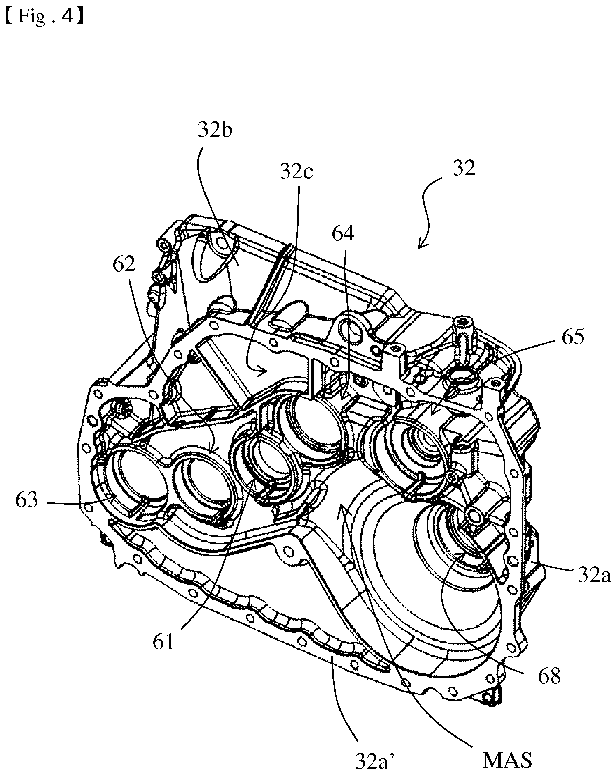

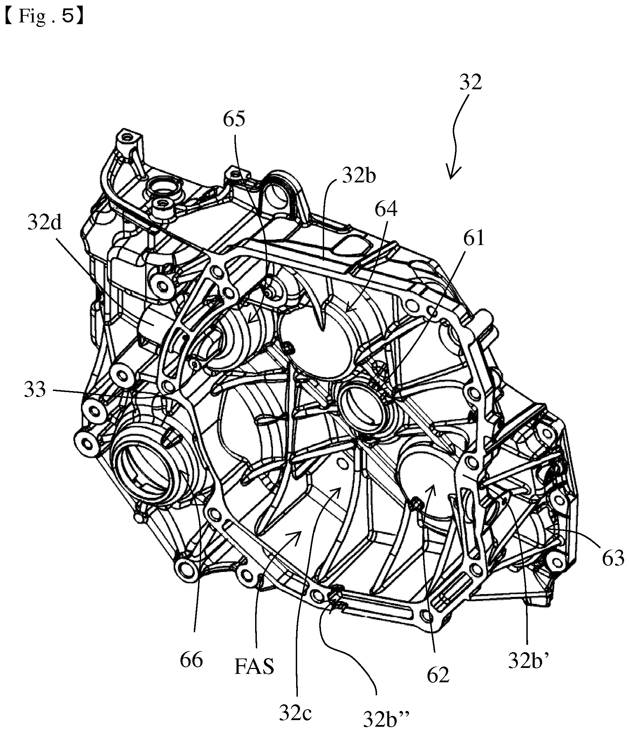

The housing 32 is primarily configured from a first space forming wall 32a that forms the main component housing space MAS (FIG. 4), a second space forming wall 32b that forms the flywheel housing space FAS for housing the flywheel FH (FIGS. 4 and 5), a partition wall 32c that partitions the main component housing space MAS and the flywheel housing space FAS (FIG. 4), and a brush housing wall 32d (FIG. 5). In this embodiment, an example of a configuration is given in which the flywheel housing space FAS corresponds to the "space" of the present invention, and the brush housing wall 32d corresponds to the "brush housing portion" of the present invention.

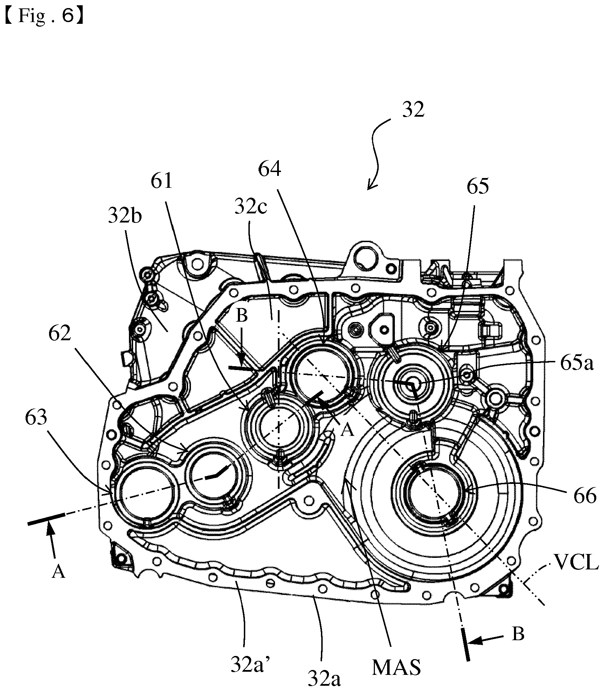

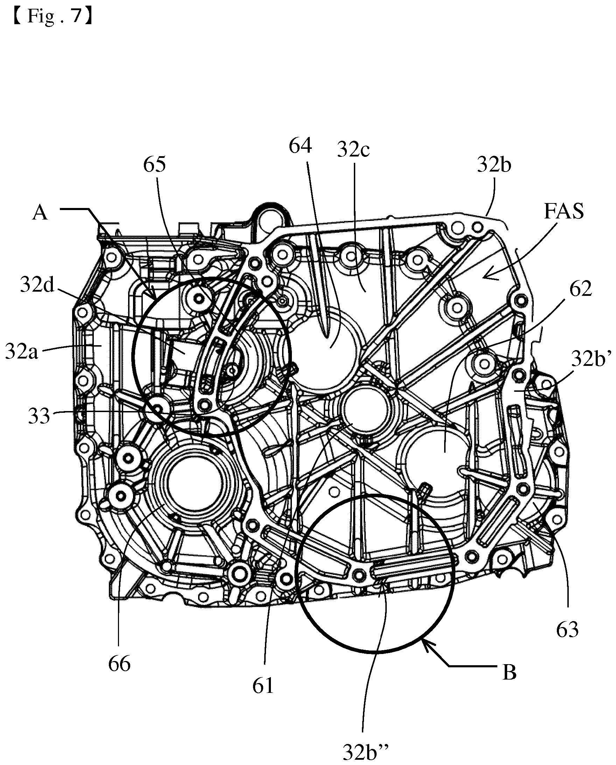

As illustrated in FIGS. 4 and 6, the first space forming wall 32a includes a flange surface 32a' against which the case main body 34 abuts; and, as illustrated in FIGS. 5 and 7, the second space forming wall 32b includes a flange surface 32b' against which the engine 2 abuts.

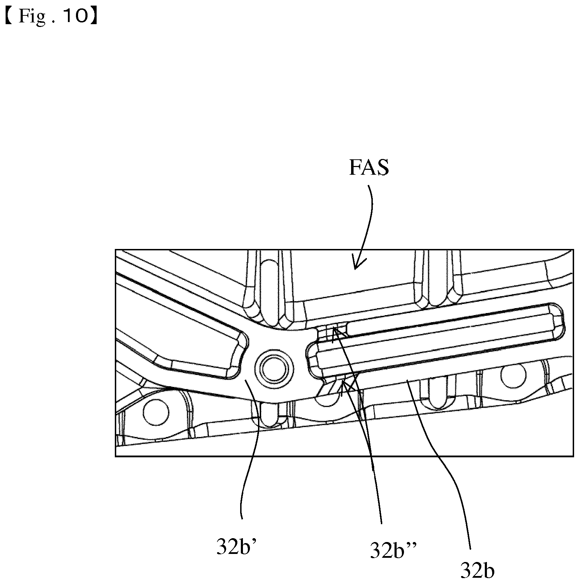

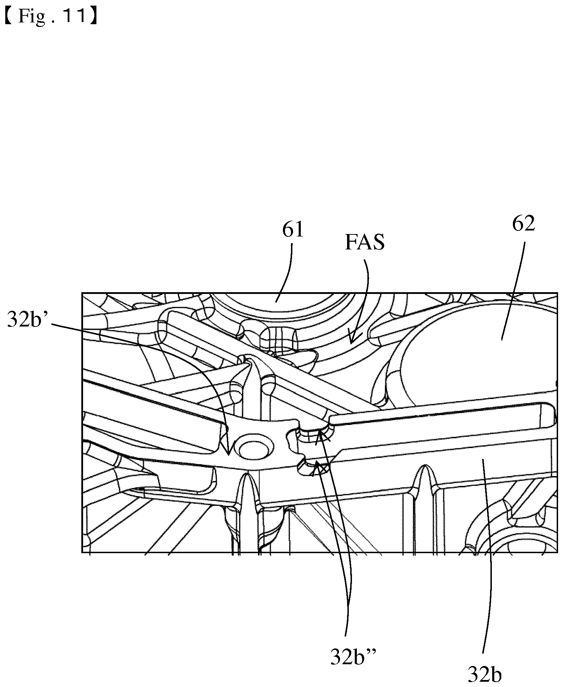

As illustrated in FIGS. 5, 7, 10, and 11, a substantially U-shaped notch 32b", whereby the flywheel housing space FAS can communicate with the outside air when the engine 2 is abutted, is formed in the flange surface 32b'.

As illustrated in FIG. 7, the notch 32b" is formed at a position of the flange surface 32b'corresponding to directly below a housing side first input shaft support 61 (the lower side in FIG. 7). Water and the like that has accumulated in the lower portion of the flywheel housing space FAS (the portion that becomes the lower portion in the vertical direction when the power output apparatus is mounted; the lower portion in FIG. 1) can be discharged out of the housing 32 by the notch 32b". In this embodiment, an example of a configuration is given in which the notch 32b" corresponds to the "water drain" of the present invention.

The housing side first input shaft support 61, a housing side first idler shaft support 62, a housing side output shaft support 63, a housing side second input shaft support 64, a housing side second idler shaft support 65 and a housing side axle support 66 are provided on the partition wall 32c (FIGS. 4, 6, and 7). The housing side first input shaft support 61, the housing side first idler shaft support 62, the housing side output shaft support 63, and the housing side second input shaft support 64 are configured to support the first input shaft 22, the output shaft 24, the first idler shaft 47, the second input shaft 26, and the second idler shaft 59 via one of pairs of bearings B1, B2, B3, B4, and B5. The housing side axle support 66 is configured to support one axle WS via a bearing (not illustrated in the drawings).

In this embodiment, an example of a configuration is given in which the housing side second idler shaft support 65 corresponds to the "shaft support" and the "first end shaft support portion" of the present invention.

As illustrated in FIG. 6, the housing side second input shaft support 64 is provided in close proximity to the housing side first input shaft support 61, at a position diagonally above and to the right of the housing side first input shaft support 61 in FIG. 6. The housing side axle support 66 is formed at a position diagonally downward and to the right of the housing side second input shaft support 64 in FIG. 6. The center of the housing side axle support 66 and the center of the housing side output shaft support 63 are formed at substantially the same position in the vertical direction (the vertical direction in FIG. 6).

As illustrated in FIG. 6, the center of the housing side second idler shaft support 65 is formed at a position between the housing side second input shaft support 64 and the housing side axle support 66, which is a position above (above and to the right in FIG. 6) a virtual connecting line VCL that connects the center of the housing side second input shaft support 64 to the center of the housing side axle support 66.

As illustrated in FIG. 7, when viewed from the flywheel housing space FAS side, the entire housing side second input shaft support 64 is disposed within the flywheel housing space FAS; roughly half of the housing side second idler shaft support 65 is disposed within the flywheel housing space FAS; and the housing side axle support 66 is disposed outside the flywheel housing space FAS.

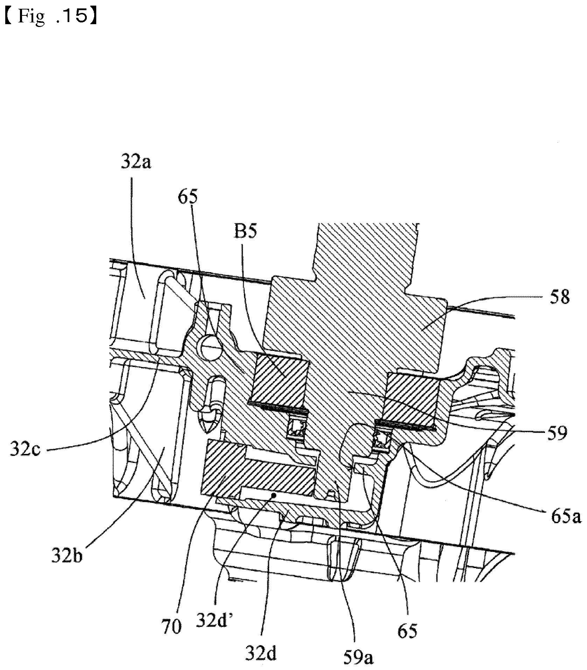

Note that as illustrated in FIGS. 3 and 15, a through bore 65a, through which the sliding contact portion 59a of the second idler shaft 59 is inserted, is formed in the center portion of the housing side second idler shaft support 65.

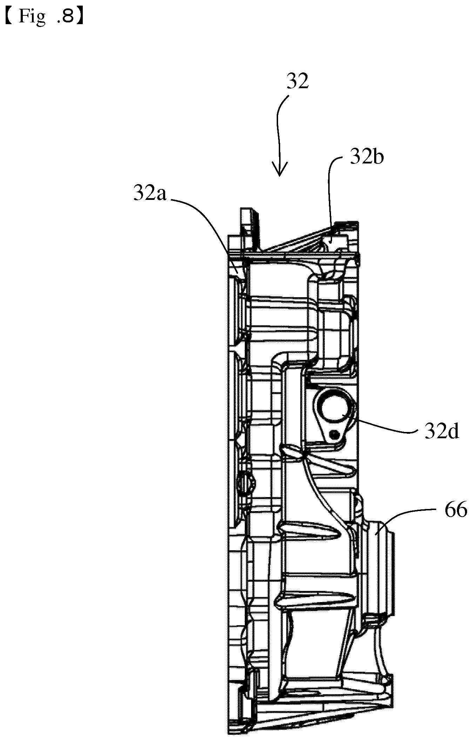

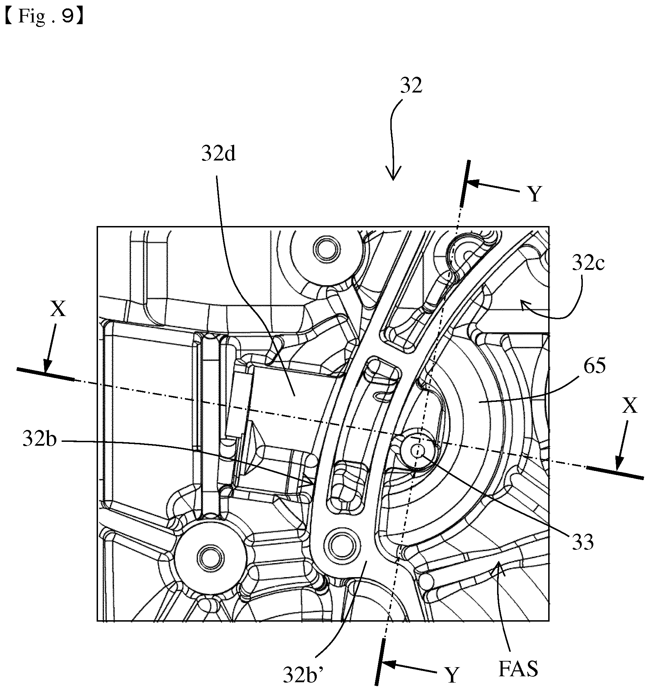

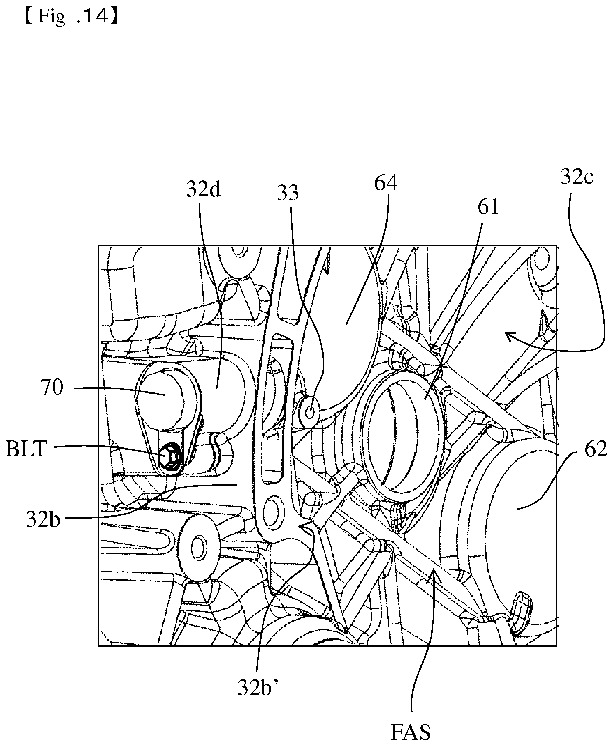

As illustrated in FIGS. 8 and 14, the brush housing wall 32d is formed in a substantially cylindrical shape and, as illustrated in FIGS. 9 and 14, is integrally formed with the second space forming wall 32b and the partition wall 32c. More specifically, as illustrated in FIG. 9, the brush housing wall 32d is configured to extend from outside the housing 32 to inside the flywheel housing space FAS, penetrating a side surface of the second space forming wall 32b, at a position (of the partition wall 32c) where the brush housing wall 32d overlaps with the housing side second idler shaft support 65 when viewed in the axial direction (direction perpendicular to the paper surface in FIG. 9).

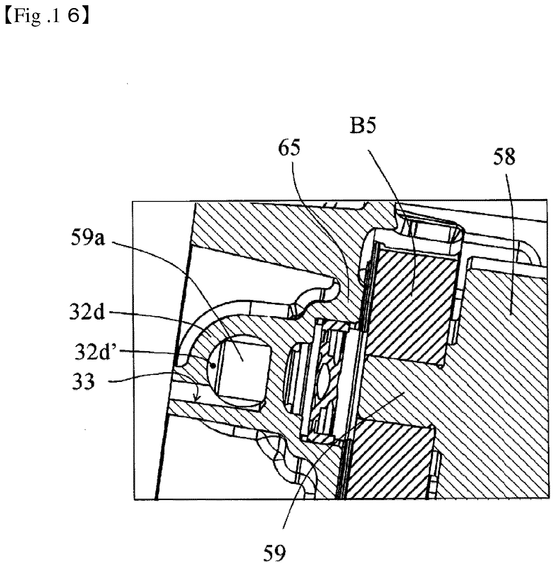

A communication hole 33 whereby an interior 32d' of the brush housing wall 32d communicates with the flywheel housing space FAS is formed in the brush housing wall 32d (see FIGS. 9, 14, and 16). Note that, as illustrated in FIG. 15, the interior 32d' of the brush housing wall 32d communicates with space inside the housing side second idler shaft support 65 via the through bore 65a.

As a result of this configuration, the sliding contact portion 59a of the second idler shaft 59 protrudes into the interior 32d' of the brush housing wall 32d via the through bore 65a when the second idler shaft 59 is supported on the housing side second idler shaft support 65 via the bearing B5. In this embodiment, an example of a configuration is given in which the interior 32d' of the brush housing wall 32d corresponds to the "housing hole" of the present invention.

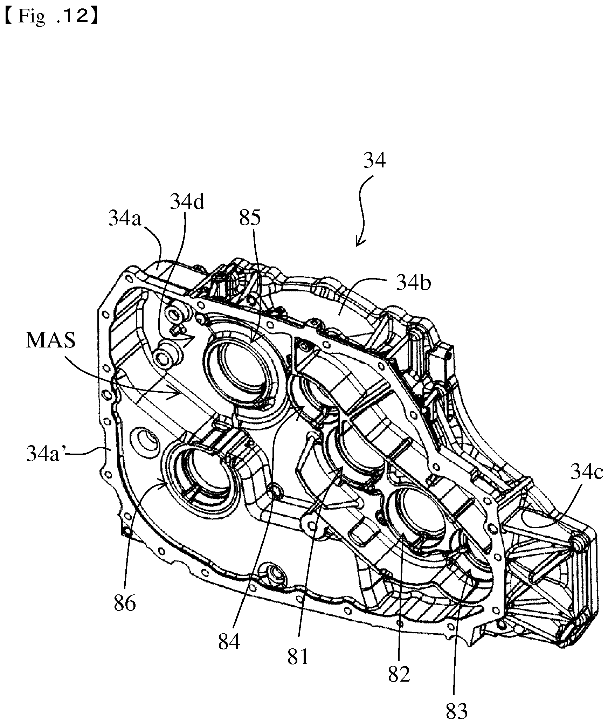

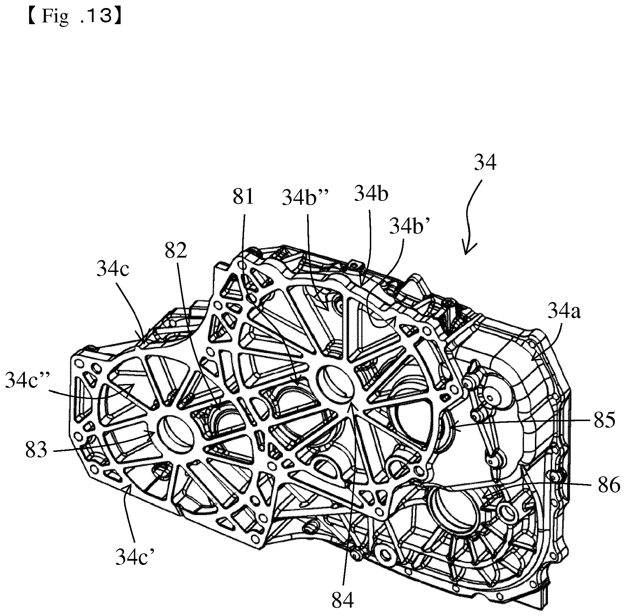

The case main body 34 is primarily configured from a third space forming wall 34a that forms the main component housing space MAS (FIG. 12), a motor attachment wall 34b for attaching the motor 4 (FIG. 13), a generator attachment wall 34c for attaching the generator 6 (FIG. 13), and a boundary wall 34d that forms a boundary between the motor attachment wall 34b and the generator attachment wall 34c (FIG. 12).

As illustrated in FIG. 12, the third space forming wall 34a includes a flange surface 34a' against which the housing 32 abuts; as illustrated in FIG. 13, the motor attachment wall 34b includes a flange surface 34b' against which the motor 4 abuts; and, as illustrated in FIG. 13, the generator attachment wall 34c includes a flange surface 34c' against which the generator 6 abuts.

Note that, as illustrated in FIG. 13, pluralities of hollow recesses 34b" and 34c" are formed in the inner sides of the motor attachment wall 34b and the generator attachment wall 34c to reduce weight.

A case main body side first input shaft support 81, a case main body side first idler shaft support 82, a case main body side output shaft support 83, a case main body side second input shaft support 84, a case main body side second idler shaft support 85, and a case main body side axle support 86 are formed in the boundary wall 34d (FIGS. 12 and 13) in association with the housing side first input shaft support 61, the housing side first idler shaft support 62, the housing side output shaft support 63, the housing side second input shaft support 64, and the housing side second idler shaft support 65, so that the first input shaft 22, the output shaft 24, the first idler shaft 47, the second input shaft 26, and the second idler shaft 59 can be supported via the other of the pairs of bearings B1, B2, B3, B4, and B5, and the other axle WS can be supported via a bearing (not illustrated in the drawings).

In this embodiment, an example of a configuration is given in which the case main body side second idler shaft support 85 corresponds to the "shaft support" and the "second end shaft support portion" of the present invention.

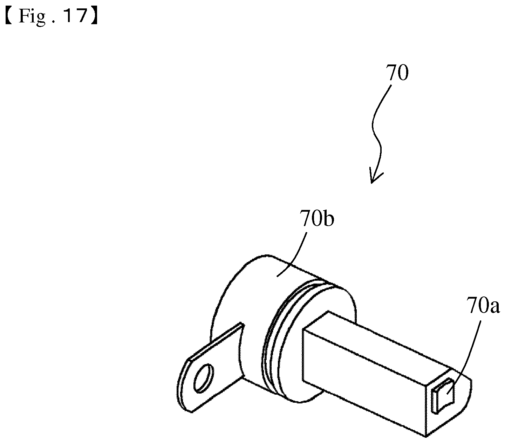

As illustrated in FIG. 17, the brush member 70 is primarily configured from a sliding contact brush 70a and a brush holder 70b. The sliding contact brush 70a is formed from a wear-resistant metal so that the sliding contact brush 70a can contact the outer circumferential surface of the sliding contact portion 59a of the second idler shaft 59 with low friction resistance and low electrical resistance, and is electrically connected to the gear case 30 by a lead wire (not illustrated in the drawings). Additionally, the gear case 30 is electrically connected to the vehicle body (not illustrated in the drawings) by a power line (not illustrated in the drawings).

The brush holder 70b is formed from an insulating member. The brush holder 70b holds the sliding contact brush 70a via a spring (not illustrated in the drawings). As illustrated in FIG. 14, the brush holder 70b is attached and fixed to the brush housing wall 32d by a bolt BLT. At this time, the sliding contact brush 70a is in a state pressed against the outer circumferential surface (the slip ring surface) of the sliding contact portion 59a of the second idler shaft 59 by the biasing force of the spring. As a result, the sliding contact brush 70a can slidably contact the outer circumferential surface (the slip ring surface) of the sliding contact portion 59a in a stable manner.

Next, a description is given of the movement of air within the brush housing wall 32d when reducing high frequency noise generated as a result of operations of the power output apparatus 1 configured as described above. When the inverter 8 is actuated due to the driving of the power output apparatus 1, high frequency noise is generated due to the switching operations of the inverter 8. The generated high frequency noise is transmitted to the motor rotational shaft 14 through the three-phase AC power line L1, the stator (not illustrated in the drawings) of the motor 4, and the rotor (not illustrated in the drawings) of the motor 4.

The high frequency noise transmitted to the motor rotational shaft 14 is transmitted from the second input shaft 26 of the power transmission device 20 to the second idler shaft 59 via the second input gear 52 and the second idler gear 56.

Here, the sliding contact brush 70a is in sliding contact with the outer circumferential surface (the slip ring surface) of the sliding contact portion 59a of the second idler shaft 59, and electrical conductivity exists between the second idler shaft 59 and the gear case 30 (the housing 32) via the brush member 70.

As a result, the high frequency noise transmitted to the second idler shaft 59 is transmitted to the gear case 30 (the housing 32) where there is electrical conductivity with the vehicle body and, as such, it is possible to reduce high frequency noise transmitted downstream in the power transmission path from the second idler shaft 59.

Note that in this configuration, the brush member 70 is brought into sliding contact with the second idler shaft 59 that is disposed, among the components of the power transmission device 20 constituting the power transmission path, comparatively far from the inverter 8 which is the source of generating the high frequency noise. As such, compared to, for example, a configuration in which the brush member 70 is brought into sliding contact with the second input shaft 26 that is disposed comparatively close to the inverter 8, reduction of the high frequency noise transmitted downstream in the power transmission path from the sliding contact portion 59a can be carried out in a more effective manner.

By the way, it is possible that high temperatures and high pressures will be generated within the brush housing wall 32d due to the sliding contact of the sliding contact brush 70a and the sliding contact portion 59a with the second idler shaft 59. However, according to the present embodiment, the interior of the brush housing wall 32d communicates with the flywheel housing space FAS via the communication hole 33 and the flywheel housing space FAS communicates with the outside air via the notch 32b". As such, it is possible to constantly maintain the pressure within the brush housing wall 32d at about atmospheric pressure and high temperatures can be prevented.

Thus, according to the present embodiment, a configuration is provided in which the sliding contact portion 59a of the second idler shaft 59 and the sliding contact brush 70a of the brush member 70 are in sliding contact with each other within the flywheel housing space FAS. As such, there is no need to increase the overall length of the power transmission device 20 for the sole reason of bringing the brush member 70 into sliding contact with the second idler shaft 59.

Additionally, a configuration is provided in which the interior 32d' of the brush housing wall 32d communicates with the outside air using the flywheel housing space FAS. As such, there is no need for a dedicated cover member to cover the sliding contact portion 59a of the second idler shaft 59 and the brush member 70, nor is there a need to provide a dedicated breathing pipe to control pressure increases within the brush housing wall 32d. As a result, it is possible to reduce the number of components.

Note that, in the configuration described above, the flywheel housing space FAS is used and, as such, there is no need to provide a separate space in the housing 32 solely for the purpose of communicating the interior 32d' of the brush housing wall 32d with the outside air.

Additionally, according to the present embodiment, a configuration is provided in which the interior of the brush housing wall 32d communicates with the outside air via the flywheel housing space FAS and the notch 32b". As such, compared to a configuration in which the interior of the brush housing wall 32d communicates directly with the outside air via the communication hole 33, it is possible to prevent the intrusion of water, foreign matter, and the like into the brush housing wall 32d in a more effective manner.

In the present embodiment, a configuration is provided in which the brush housing wall 32d is integrally formed with the housing side second idler shaft support 65, and the interior 32d' of the brush housing wall 32d communicates with the outside air via the flywheel housing space FAS.

However, as a reference example of a power transmission device which does not form the present invention, a configuration is possible in which the brush housing wall 32d is integrally formed with the case main body side second idler shaft support 85, and the interior 32d' of the brush housing wall 32d communicates with the outside air via one or more of the hollow recesses 34b" of the motor attachment wall 34b. In this case, it is sufficient that one of more of notches be formed in the flange surface 34b' whereby the one or more of the hollow recesses 34b" can communicate with the outside air when the motor 4 is abutted against the flange surface 34b'.

In the present embodiment, a configuration is provided in which the sliding contact portion 59a is provided on the second idler shaft 59, and the brush member 70 is brought into sliding contact with this sliding contact portion 59a. However, as another reference example of a power transmission device which does not form the present invention, a configuration is possible in which the brush member 70 is brought into sliding contact with the second input shaft 26.

In this case, it is sufficient that the brush housing wall 32d is integrally formed with the housing side second input shaft support 64 or the case main body side second input shaft support 84, and the interior 32d' of the brush housing wall 32d communicates with the outside air via the flywheel housing space FAS or the hollow recesses 34b".

In the present embodiment, a configuration is provided in which the power output apparatus 1 is mounted in a hybrid automobile. However, as further another reference example of a power transmission device which does not form the present invention, a configuration is possible in which the power output apparatus 1 is mounted in an electric automobile. In this case, it is sufficient that the brush housing wall 32d is integrally formed with the case main body side second idler shaft support 85, and the interior 32d' of the brush housing wall 32d communicates with the outside air via the hollow recesses 34b". Note that it is obvious that the brush housing wall 32d may be integrally formed with the housing side second idler shaft support 65.

The present embodiment should be construed as an illustration of an example of an embodiment of the present invention. Accordingly, the present invention is not limited to the configuration of the present embodiment.

### Reference Signs List

- 1: Power output apparatus (power output apparatus)
- 2: Engine (power generation member, internal combustion engine)
- 4: Motor (electric motor)
- 6: Generator (generator)
- 14: Motor rotational shaft (rotational shaft of the electric motor)
- 16: Generator rotational shaft (rotational shaft of the generator)
- 20: Power transmission device (power transmission device)
- 22: First input shaft
- 24: Output shaft
- 26: Second input shaft (input shaft)
- 28: Differential device
- 30: Gear case (case member)
- 32: Housing
- 32a: First space forming wall
- 32a': Flange surface
- 32b: Second space forming wall
- 32b': Flange surface
- 32b": Notch (water drain)
- 32c: Partition wall
- 32d: Brush housing wall (brush housing portion)
- 32d': Interior of brush housing wall 32d (housing hole)
- 33: Communication hole (communication hole)
- 34: Main case body
- 34a: Third space forming wall
- 34a': Flange surface
- 34b: Motor attachment wall
- 34b': Flange surface
- 34b": Hollow recess
- 34c: Generator attachment wall
- 34c': Flange surface
- 34c": Hollow recess
- 34d: Boundary wall
- 42: First input gear
- 44: First output gear
- 46: First idler gear
- 47: First idler shaft
- 52: Second input gear
- 54: Ring gear
- 56: Second idler gear
- 58: Third idler gear
- 59: Second idler shaft (first shaft, intermediate shaft)
- 59a: Sliding contact portion
- 61: Housing side first input shaft support
- 62: Housing side first idler shaft support
- 63: Housing side output shaft support
- 64: Housing side second input shaft support
- 65: Housing side second idler shaft support (first end shaft support portion)
- 65a: Through bore
- 66: Housing side axle support
- 70: Brush member (brush member)
- 70a: Sliding contact brush
- 70b: Brush holder
- 81: Case main body side first input shaft support
- 82: Case main body side first idler shaft support
- 83: Case main body side output shaft support
- 84: Case main body side second input shaft support
- 85: Case main body side second idler shaft support (second end shaft support portion)
- 86: Case main body side axle support
- CS: Crank shaft (output shaft of internal combustion engine)
- FH: Flywheel (rotation fluctuation smoothing member)
- L1: Three-phase AC power line
- L2: Power line
- TM1: First gear mechanism
- TM2: Second gear mechanism
- B1: Bearing
- B2: Bearing
- B3: Bearing
- B4: Bearing
- B5: Bearing
- WS: Axle (drive shaft)
- VCL: Virtual connecting line
- MAS: Main component housing space
- FAS: Flywheel housing space (space)
- BLT: Bolt

## Claims

1. A power transmission device (20) configured to transmit power from an electric motor (4), which is input via a rotational shaft (14) of the electric motor, to a drive shaft (WS); the power transmission device comprising:
an input shaft (26) disposed in parallel with the drive shaft and connected directly to the rotational shaft of the electric motor;
a first shaft (59) disposed in parallel with the drive shaft and connected to the rotational shaft of the electric motor and to the drive shaft, and configured as an intermediate shaft disposed between the input shaft and the drive shaft; and
a case member (30) having a shaft support that supports the first shaft,
wherein:
the first shaft is provided with a brush member (70) that is in sliding contact with a first axial end portion (59a) of the first shaft; and
the shaft support includes a first end shaft support portion (65) that supports the first axial end portion of the first shaft, and a second end shaft support portion (85) that supports a second axial end portion of the first shaft;
**characterized in that**:
the power transmission device is configured to transmit power from an internal combustion engine (2) to a rotational shaft (16) of a generator (6), and to drive the electric motor (4) using power generated by the generator (6);
the case member is configured such that a power generation member that is the internal combustion engine (2) and related to a generation of power transmitted to the first shaft is attached to the case member on a side where the first end shaft support portion is disposed, and
the case member defines, between the case member and the power generation member, a space (FAS, 34b") that is formed between the case member and the internal combustion engine and communicates with outside air when the power generation member is attached to the case member;
at least a portion of the first end shaft support portion is disposed within the space;
a brush housing portion (32d) that houses the brush member is provided integrally with the first end shaft support portion of which at least a portion is disposed within the space; and
the brush housing portion defines a housing hole (32d') which extends from outside the case member to the first axial end portion and into which the first axial end portion protrudes via a through bore (65a) formed in the center portion of the first end shaft support portion when the first shaft is supported on the first end shaft support portion, and a communication hole (33) whereby the housing hole communicates with the space.

2. The power transmission device (20) according to claim 1, wherein:
the space (FAS) is a housing space for housing a rotation fluctuation smoothing member (FH) which is attached to a crank shaft (CS) in order to smooth rotation fluctuation of the crank shaft of the internal combustion engine.

3. The power transmission device (20) according to claim 1 or 2, wherein:
the case member (30) includes a water drain (32b") configured to discharge water that has accumulated in the space (FAS, 34b"); and
the space is formed between the case member and the power generation member (2, 4) so as to communicate with outside air using the water drain.

4. A power output apparatus, comprising:
an electric motor (4);
an inverter (8) electrically connected to the electric motor;
an internal combustion engine (2);
a generator (6) configured to generate power with driving of the internal combustion engine;
a storage battery (10) electrically connected to the generator and the inverter;
the power transmission device (20) according to any one of claims 1 to 3, configured to transmit power from the electric motor to the drive shaft (WS) and also to transmit power from the internal combustion engine to the generator,
wherein;
the power output apparatus is configured such that the power generated by the generator is stored in the storage battery (10), and configured such that the power from the storage battery is supplied to the electric motor via the inverter (8).

## Patentansprüche

1. Kraftübertragungsvorrichtung (20), die konfiguriert ist, Kraft von einem Elektromotor (4), die über eine Drehwelle (14) des Elektromotors eingegeben wird, auf eine Antriebswelle (WS) zu übertragen; wobei die Kraftübertragungsvorrichtung aufweist:
eine Eingangswelle (26), die parallel zur Antriebswelle angeordnet und direkt mit der Drehwelle des Elektromotors verbunden ist;
eine erste Welle (59), die parallel zur Antriebswelle angeordnet und mit der Drehwelle des Elektromotors und mit der Antriebswelle verbunden ist, und die als eine Zwischenwelle konfiguriert ist, die zwischen der Eingangswelle und der Antriebswelle angeordnet ist; und
ein Gehäuseelement (30) mit einer Wellenhalterung, die die erste Welle hält, wobei:
die erste Welle mit einem Bürstenelement (70) versehen ist, das mit einem ersten axialen Endabschnitt (59a) der ersten Welle in Gleitkontakt steht; und
die Wellenhalterung einen ersten Endwellenhalteabschnitt (65), der den ersten axialen Endabschnitt der ersten Welle hält, und einen zweiten Endwellenhalteabschnitt (85) aufweist, der einen zweiten axialen Endabschnitt der ersten Welle hält;
**dadurch gekennzeichnet, dass**:
die Kraftübertragungsvorrichtung konfiguriert ist, Kraft von einem Verbrennungsmotor (2) auf eine Drehwelle (16) eines Generators (6) zu übertragen, und den Elektromotor (4) unter Verwendung des durch den Generator (6) erzeugten Stroms anzutreiben;
das Gehäuseelement so konfiguriert ist, dass ein Krafterzeugungselement, das der Verbrennungsmotor (2) ist und mit der Erzeugung der Kraft in Beziehung steht, die auf die erste Welle übertragen wird, am Gehäuseelement auf einer Seite angebracht ist, wo der erste Endwellenhalteabschnitt angeordnet ist, und
das Gehäuseelement zwischen dem Gehäuseelement und dem Krafterzeugungselement einen Raum (FAS, 34b") definiert, der zwischen dem Gehäuseelement und dem Verbrennungsmotor ausgebildet ist und mit der Außenluft in Verbindung steht,
wenn das Krafterzeugungselement am Gehäuseelement angebracht ist;
mindestens ein Abschnitt des ersten Endwellenhalteabschnitts innerhalb des Raums angeordnet ist;
ein Bürstenaufnahmeabschnitt (32d), der das Bürstenelement aufnimmt, integral mit dem ersten Endwellenhalteabschnitt vorgesehen ist, von dem mindestens ein Abschnitt innerhalb des Raums angeordnet ist; und
der Bürstenaufnahmeabschnitt ein Aufnahmeloch (32d'), das sich von der Außenseite des Gehäuseelements zum ersten axialen Endabschnitt erstreckt und in den der erste axiale Endabschnitt über eine Durchgangsbohrung (65a) vorsteht,
die im Mittelabschnitt des ersten Endwellenhalteabschnitts ausgebildet ist, wenn die erste Welle am ersten Endwellenhalteabschnitt gehalten wird, und ein Verbindungsloch (33) definiert, wodurch das Aufnahmeloch mit dem Raum in Verbindung steht.

2. Kraftübertragungsvorrichtung (20) nach Anspruch 1, wobei:
der Raum (FAS) ein Aufnahmeraum zur Aufnahme eines Drehschwankungs-Glättungselements (FH) ist, das an einer Kurbelwelle (CS) angebracht ist, um eine Drehschwankung der Kurbelwelle des Verbrennungsmotors zu glätten.

3. Kraftübertragungsvorrichtung (20) nach Anspruch 1 oder 2, wobei:
das Gehäuseelement (30) einen Wasserablauf (32b") aufweist, der konfiguriert ist, Wasser abzuleiten, dass sich im Raum (FAS, 34b") angesammelt hat; und
der Raum zwischen dem Gehäuseelement und dem Krafterzeugungselement (2, 4) so ausgebildet ist, dass der unter Verwendung des Wasserablaufs mit der Außenluft in Verbindung steht.

4. Kraftabgabevorrichtung, die aufweist:
einen Elektromotor (4);
einen Wechselrichter (8), der elektrisch mit dem Elektromotor verbunden ist;
einen Verbrennungsmotor (2);
einen Generator (6), der konfiguriert ist, beim Antrieb des Verbrennungsmotors Strom zu erzeugen;
einen Akkumulator (10), der elektrisch mit dem Generator und dem Wechselrichter verbunden ist;
die Kraftübertragungsvorrichtung (20) nach einem der Ansprüche 1 bis 3, die konfiguriert ist, Kraft vom Elektromotor auf die Antriebswelle (WS) zu übertragen und außerdem Kraft vom Verbrennungsmotor auf den Generator zu übertragen,
wobei:
die Kraftabgabevorrichtung so konfiguriert ist, dass der durch den Generator erzeugte Strom im Akkumulator (10) gespeichert wird, und die so konfiguriert ist, dass der Strom vom Akkumulator über den Wechselrichter (8) dem Elektromotor zugeführt wird.

## Revendications

1. Dispositif de transmission de puissance (20) prévu pour transmettre la puissance d'un moteur électrique (4), entrée par l'intermédiaire d'un arbre rotatif (14) du moteur électrique, à un arbre de transmission (WS) ; ledit dispositif de transmission de puissance comprenant :
un arbre d'entrée (26) disposé parallèlement à l'arbre de transmission et raccordé directement à l'arbre rotatif du moteur électrique ;
un premier arbre (59) disposé parallèlement à l'arbre de transmission et connecté à l'arbre rotatif du moteur électrique et à l'arbre de transmission, et configuré comme arbre intermédiaire disposé entre l'arbre d'entrée et
l'arbre de transmission ; et
un élément de carter (30) ayant un support d'arbre supportant le premier arbre, où :
le premier arbre est pourvu d'un élément de balai (70) en contact glissant avec une première partie d'extrémité axiale (59a) du premier arbre ; et
le support d'arbre comprend une première partie de support d'extrémité d'arbre (65) supportant la première partie d'extrémité axiale du premier arbre, et une deuxième partie de support d'extrémité d'arbre (85) supportant une deuxième partie d'extrémité axiale du premier arbre ;
**caractérisé en ce que** :
ledit dispositif de transmission de puissance est prévu pour transmettre la puissance d'un moteur à combustion interne (2) à un arbre rotatif (16) d'un génératrice (6),
et pour entraîner le moteur électrique (4) au moyen de la puissance générée par la génératrice (6) ;
l'élément de carter est configuré de sorte qu'un élément de génération de puissance qui est le moteur à combustion interne (2) et dédié à une génération de puissance transmise au premier arbre est fixé à l'élément de carter sur un côté où est disposée la première partie de support d'extrémité d'arbre, et
l'élément de carter définit, entre l'élément de carter et l'élément de génération de puissance, un espace (FAS, 34b") formé entre l'élément de carter et le moteur à combustion interne et communiquant avec l'air extérieur lorsque l'élément de génération de puissance est fixé à l'élément de carter ;
la première partie de support d'extrémité d'arbre est au moins partiellement disposée à l'intérieur de l'espace ;
une partie de logement de balai (32d) recevant l'élément de balai est prévue d'un seul tenant avec la première partie de support d'extrémité d'arbre dont au moins une partie est disposée à l'intérieur de l'espace ; et
la partie de logement de balai définit un trou de logement (32d') s'étendant de l'extérieur de l'élément de carter à la première partie d'extrémité axiale et dans lequel pénètre la première partie d'extrémité axiale via un alésage traversant (65a) formé dans la section centrale de la première partie de support d'extrémité d'arbre lorsque le premier arbre est supporté sur la première partie de support d'extrémité d'arbre, et un trou de communication (33) permettant la communication du trou de logement avec l'espace.

2. Dispositif de transmission de puissance (20) selon la revendication 1, où :
l'espace (FAS) est un espace de logement pour la réception d'un élément d'atténuation de variations de rotation (FH) fixé à un vilebrequin (CS) pour atténuer les variations de rotation du vilebrequin du moteur à combustion interne.

3. Dispositif de transmission de puissance (20) selon la revendication 1 ou la revendication 2, où :
l'élément de carter (30) comprend une évacuation d'eau (32b") prévue pour évacuer l'eau accumulée dans l'espace (FAS, 34b") ; et
l'espace est formé entre l'élément de carter et l'élément de génération de puissance (2, 4) de manière à communiquer avec l'air extérieur au moyen de l'évacuation d'eau.

4. Appareil de sortie de puissance, comprenant :
un moteur électrique (4) ;
un onduleur (8) connecté électriquement au moteur électrique ;
un moteur à combustion interne (2) ;
un génératrice (6) prévue pour générer une puissance par entraînement du moteur à combustion interne ;
une batterie d'accumulateurs (10) connectée électriquement à la génératrice et à l'onduleur ;
le dispositif de transmission de puissance (20) selon l'une des revendications 1 à 3, prévu pour transmettre une puissance du moteur électrique à l'arbre de transmission (WS) et aussi pour transmettre une puissance du moteur à combustion interne à la génératrice,
où :
ledit appareil de sortie de puissance est configuré de sorte que la puissance générée par la génératrice est stockée dans la batterie d'accumulateurs (10), et configuré de sorte que la puissance de la batterie d'accumulateurs alimente le moteur électrique via l'onduleur (8).
